# EUROPEAN PATENT SPECIFICATION

(11) **EP 2 597 057 B1**
(45) Date of publication and mention of the grant of the patent: **26.09.2018**
(21) Application number: 12192895.6
(22) Date of filing: 16.11.2012
(51) Int. Cl.: B65B 5/02, B29C 65/22, B29C 65/00, B65F 1/06, B29C 65/74

(54) **Waste packing system with fusion seal apparatus**
Abfallverpackungssystem mit Fusionsdichtungsvorrichtung
Système de conditionnement de déchets avec appareil de scellement par fusion

(30) Priority: 23.11.2011 EP 11190266
(43) Date of publication of application: 29.05.2013
(73) Proprietor: Flexopack S.A., 194 00 Koropi (GR)
(72) Inventor: Gkinosatis, Dimitris, 19400 Koropi Attica (GR)
(74) Representative: Isarpatent

(56) References cited:
- EP-A1- 2 194 006
- EP-A1- 2 332 723
- EP-A2- 0 686 497
- EP-A2- 2 520 518
- WO-A2-2006/076393
- WO-A2-2009/052291
- GB-A- 2 203 326
- US-A- 5 092 105
- US-A- 5 358 792
- US-A- 6 065 272
- US-A1- 2005 079 372
- US-A1- 2009 034 886
- US-B1- 6 220 753
- US-B2- 6 516 588

## Description

The present invention is directed to a waste packaging device, a method of storing waste, .

A lot of waste products produce smells that are annoying to the environment. Examples are decayed food, kid nappies and cat litter.

In the prior art there are many films that could be used for protection from malodors. As it is well known in the art, the use of materials like EVOH, PVDC, polyacrylonitrile is recommended in order to not allow malodors escape from the container (eg bag or other configuration) and create an unpleasant atmosphere.

There are also a lot of known configurations of packing a certain length of film (eg 20 meters) in a compressed form (eg in a cassette). Examples of the representative cassettes are shown in US 4,934,529 or US 3,536,192.

Generally the cassette comprises a tubular core, casing wall, cassette bottom and lid. The film is stored in an area between tubular core, casing wall and cassette bottom in a compressed configuration. The flexible tubing is dispensed from the cassette. After the malodorous item is thrown into the bag the core or the lid is rotated and the flexible tube is twisted so that it closes as hermetically as possible the waste/environment area. To dispose the next diaper the user opens the lid and inserts the diaper. The previous pack is pushed downward and a new knot is formed by twisting the tube above the newly deposited diaper. Thus the device stores the diapers in a series of individually wrapped packages in the storage chamber, each package being separated from adjacent packages by twists in the tube.

Separation of one piece of flexible film from the next by means of a rotary knife is preferred.

In the prior art as a general rule the separation of each piece of the film in which the smelly item is contained from the next piece of the film is done with a twisting mechanism. This twist separates in a "hermetic" way the one piece from the other.

That is to say, it is a problem in the prior art techniques that the twist is never really hermetic. Odour molecules being extremely small have the capability to escape through the folds so the odour starts to be noticeable after a few days. There is still a need for a more hermetic way to isolate each individual pack with the next one.

Methods based on heat sealing have been proposed in the prior art as for example in EP 0005660. This concept is quite complicated as it uses sheaths to form discrete packages. The complex nature of this design makes it expensive to manufacture.

According to the prior art document US 4869049, the use of electricity is to be avoided anywhere near babies therefore this approach has not been commercially successful. So, twisting is the preferred option for separating one pack from the next.

Heat sealing and cutting as means to separate each pack from the next is also an object of US 6516588. In this reference there is no mention to the use of a low voltage battery. So, in general this method is not suitable enough as it involves electricity of high voltage and this is to be avoided for this sensitive application. Also, there is no reference to a low voltage battery.

Further, US6516588 does not refer to a suitable film that can be sealed efficiently and also through pleats and wrinkles (which are unavoidable during this kind of application). According to this application "the plastic tubing may be any plastic tubing known in the art" as described in col. 4 lines 30-31.

GB 2 203 326 A describes a refuse bag holder providing a bin for supporting a refuse bag of plastic material, comprising a pair of sealing dies for sealing the bag.

US 6,516,588 B2 describes a diaper disposal system for packaging odorous waste objects in individual sealed packages comprising a sealing member which preferably seals by thermally fusing the packages.

EP 2 332 723 A1 describes a polymeric film comprising an odor barrier material and being able to pack malodorous waste.

The present invention provides a safe and simple apparatus that is quick and easy to operate, that stores soiled nappies in flexible tubing in a very hygienic way so that they can be disposed collectively after a certain amount of time. It also provides a suitable plastic film to be used accordingly.

### SUMMARY OF THE INVENTION

The present invention provides a method for storing waste by using a waste packaging device comprising
a. a dispensing apparatus where a plastic film is stored
b. a bin where a fusion seal apparatus is located, and
c. the fusion seal apparatus containing sealing jaws (5) and comprising a battery with a maximum voltage of equal or less than 20V for providing the electric current necessary for heat sealing,
d. an axis (1),
the method comprising the following steps
a. pulling out plastic film from the dispensing apparatus,
b. putting a waste item in a suitable length of the film,
c. closing hermetically the plastic film with the use of the fusion seal apparatus,
where the seal is between a part of the film and another part of the same or other film, where the sealed parts are put sequentially in the bin,
wherein the movement of the sealing jaws (5) is initiated by a rotation of the axis 1 which leads to a rotation of the sealing jaws (5), and
where the film comprises at least a layer of at least 50% per weight polyethylene homopolymer and/or copolymer, and where the weight/surface ratio of the film is less than 20 grams per square meter and the film can be heat sealed with the thermal energy transferred with the battery with a voltage of less than 20 V, and where the temperature for the heat sealing is set to less than 80°C.

In another aspect the present invention is directed to a waste packaging device comprising
a. a dispensing apparatus where a plastic film is stored
b. a bin where a fusion seal apparatus is located, and
c. the fusion seal apparatus containing sealing jaws (5) and comprising a battery with a maximum voltage of equal or less than 20V for providing the electric current necessary for heat sealing,
d. an axis (1),
wherein the sealing jaws (5) are movable by a rotation of the axis 1 which leads to a rotation of the sealing jaws (5), and
where the film comprises at least a layer of at least 50% per weight polyethylene homopolymer and/or copolymer, and where the weight/surface ratio of the film is less than 20 grams per square meter and the film can be heat sealed with the thermal energy transferred with the battery with a voltage of less than 20 V, and where the temperature for the heat sealing is set to less than 80°C.

The battery may be rechargeable or non-rechargeable. Preferably, it is rechargeable.

Further described is a multilayer plastic film comprising at least
1. An outer layer comprising at least 50% per weight of polyethylene homopolymer or copolymer
2. An internal layer comprising at least one oxygen barrier material
3. An inner layer comprising at least 50% per weight polyethylene homopolymer or copolymer,
for use in the above apparatus and method.

### Definitions:

In this application the following definitions are used:
The term "waste" refers to any receptable that is useless and has to be disposed of properly. For example, the term waste includes diapers or other dirt.

The term "dispensing apparatus" refers to any apparatus where the film is stored before the application process. Examples are cassettes or reels.

The term "cassette" refers to any container wherein the film can be put. Often the film is in compressed form. The cassette is usually plastic and circular but other configurations may be possible.

The term "fusion seal" refers to the sealing of film by melting. A different kind of seal is by twisting the plastic film or by used an adhesive(in this latter case a kind of seal is made by pressure alone).

The term "bin" refers to a container where many waste packs are put one after the other. Each pack comprises a portion of the sealed film and of course the waste inside.

The term "film" refers to a flat or tubular flexible structure of thermoplastic material.
The term "voltage" between two points refers to the electrical driving force that could determine an electric current between these points.

The term "battery" refers to one or more electrochemical cells that convert stored chemical energy to electrical energy.

The term "rechargeable" refers to batteries that are designed in a way to be recharged and used multiple times.

The term "multilayer" refers to a film comprising 2 or more layers.

The phrase "longitudinal direction" or "machine direction" herein abbreviated " MD" refers to a direction along the length of the film.
The phrase "outer layer" refers to the film layer which comes in immediate contact with the outside environment (atmosphere).

The phrase "internal layer" as used herein refers to a film layer located between the outer and the inner layer of the multilayer film. It is not in contact with the atmosphere or the good to be packaged and usually comprises an oxygen barrier material.

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non olefinic comonomer (such as ester) etc.

Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra-low density polyethylene (ULDPE), metallocene catalysed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" or EVA refer to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials, are EVOH, PVDC or polyamide. Those polymers usually are comprised in the internal layer of the multilayer film.

As used herein, the term EVOH refers to saponified products of ethylene vinyl ester copolymers. The ethylene content is typically in the range of 25 to 50% per mol. All the later references to EVOH ethylene content will be in % per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT(polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn from Dupont.

As used herein, the term "polypropylene" refers to polymers incorporating propylene structural units. Examples of these, are homo polypropylenes, random copolymers of propylene and ethylene, block copolymers of propylene and ethylene, copolymers or blends of propylene and rubber (such as blends of polypropylene and ethylene propylene rubber), propylene ethylene alpha olefin terpolymers and others.

These polymers may be isotactic, syndiotactic or atactic. Isotactic is preferred.

In line with the above definition, it is noted that for the purposes of the present invention, the term "inner layer" is to be regarded as an additional outer layer of the multilayer film, which is in direct contact with the item to be packaged (i.e. an outer layer of the film which is located on the inside after a packaging process, not exposed to the environment).

As used herein the term "substantially non resilient material" refers to materials or material compounds comprising at least 40% per weight inorganics like calcium carbonate, titanium dioxide, wollastonite, mica, glass fibers, dolomite and the like. The rest percentage per weight can be polyethylene, polypropylene, styrene polymer or other thermoplastic material.

As used herein the term "manual" means the movement due to human physical force as opposed to automatic movements which do not need the intervention of the human force.

All measurement methods mentioned herein are readily available for the skilled person. For example, they can be obtained from the American National Standards Institute at: www.webstore.ansi.org.

All percentages are based on weight per weight ratio, except when otherwise stated.

### DETAILED DESCRIPTION OF THE INVENTION

The present invention is directed to a method for storing waste by using a waste packaging device comprising
a. a dispensing apparatus where a plastic film is stored
b. a bin where a fusion seal apparatus is located, and
c. the fusion seal apparatus containing sealing jaws (5) and comprising a battery with a maximum voltage of equal or less than 20V for providing the electric current necessary for heat sealing,
d. an axis (1),
the method comprising the following steps
a. pulling out plastic film from the dispensing apparatus,
b. putting a waste item in a suitable length of the film,
c. closing hermetically the plastic film with the use of the fusion seal apparatus,
where the seal is between a part of the film and another part of the same or other film, where the sealed parts are put sequentially in the bin,
wherein the movement of the sealing jaws (5) is initiated by a rotation of the axis 1 which leads to a rotation of the sealing jaws (5), and
where the film comprises at least a layer of at least 50% per weight polyethylene homopolymer and/or copolymer, and where the weight/surface ratio of the film is less than 20 grams per square meter and the film can be heat sealed with the thermal energy transferred with the battery with a voltage of less than 20 V, and where the temperature for the heat sealing is set to less than 80°C.

The present invention is in a further aspect directed to a waste packaging device comprising
a. a dispensing apparatus where a plastic film is stored
b. a bin where a fusion seal apparatus is located, and
c. the fusion seal apparatus containing sealing jaws (5) and comprising a battery with a maximum voltage of equal or less than 20V for providing the electric current necessary for heat sealing,
d. an axis (1),
wherein the sealing jaws (5) are movable by a rotation of the axis 1 which leads to a rotation of the sealing jaws (5), and
where the film comprises at least a layer of at least 50% per weight polyethylene homopolymer and/or copolymer, and where the weight/surface ratio of the film is less than 20 grams per square meter and the film can be heat sealed with the thermal energy transferred with the battery with a voltage of less than 20 V, and where the temperature for the heat sealing is set to less than 80°C.

Where the movement of the sealing jaws may be done manually by the rotation of an axis.

The battery may be rechargeable or non-rechargeable. Preferably, it is rechargeable.

### DESCRIPTION OF THE FIGURES

Fig. 1 and 2 show a top view and a bottom view of the mechanical rotation mechanism of the present invention.

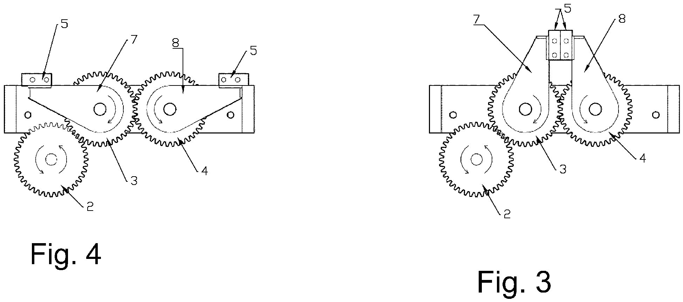

Fig. 3 and 4 each show section views of the mechanical rotation mechanism of the present invention.

### DISPENSING APPARATUS

A dispensing apparatus of the present invention preferably has the form of a cassette. Nevertheless, other dispensing apparatus are also possible in which a cassette is not used. For example the film can be wound in the form of a mini roll around a paper core. Alternatively, two such mini rolls may comprise the film in such a way that the film wound in the first mini roll will heat seal to the film that is wound in the second mini roll.

### CASSETTE

In a preferred embodiment the cassette useful for the invention is circular in shape. Preferably it is made by plastic, eg polypropylene.

It is also possible to be manufactured from other means more friendly to the environment such as paper, biodegradable plastic or non-biodegradable plastic where a percentage of "degrading" additives have been added.

Generally, the cassette comprises a tubular core , casing wall, cassette bottom and lid. The film is stored in an area between tubular core, casing wall and cassette bottom in a compressed configuration. The flexible tubing is dispensed from the cassette.

In a further preferred embodiment of the invention the cassette comprises a malodor counteractant useful for absorbing, adsorbing or masking the smell of the waste.

In a preferred embodiment of the invention the film inside the cassette the film is in compressed configuration.

### SEAL APPARATUS

A preferred version of the sealing apparatus of the present invention is an apparatus capable of impulse sealing. An impulse sealer is a jaw sealer backed with resilient silicone rubber. Electric current flows through Nichrome ribbon stretched over one over one or both surfaces and covered with high temperature release film and fabric.

Another preferred version of the seal apparatus is wire or knife sealing. According to this method a hot wire or knife seals and cuts the film.

Other methods for the seal apparatus that could be used according to the invention include bar sealing, band sealing, ultrasonic sealing, friction sealing, contact sealing, dielectric sealing, radiant sealing. For these methods please refer to the Wiley Encyclopedia of packaging technology, edition 1997.

In a preferred embodiment of the invention the electric current necessary for the heat sealing and fusion is provided through a rechargeable battery. The voltage of the rechargeable battery is preferably equal or less than 20 V, even more preferably less than 16 V, even more preferably less than 12V.

According to the invention the temperature for the heat seal is less than 80°C.

In a further preferred version of the invention, the sealing time is less than 5 seconds, more preferably less than 3 seconds, more preferably less than 1 second.

In a further preferred version of the invention, the cutting of each pack to the previous one is done simultaneously with the sealing by the use of a wire/knife configuration. In another version, there is no cutting. In this case all the packs are put together inside the bin in a single line.

The use of a rechargeable battery of low voltage assures a safe procedure that is more user friendly than household electricity.

Another alternative possibility of the invention is the use of more than one heat seal to make an individual pack. So two, three or four seals are possible.

In the case of three or four seals, the film should be in a "single sheet" configuration instead of "flexible tubing".

### MOVEMENT OF THE SEALING JAWS

The mechanism activates with manual rotation of axis 1.

The activation of axis 1 can take place by a steering wheel, a lever or an electric motor.

On the axis 1 which rotates freely with its ends stabilized on the frame 6 two gears (2) are put on either side.

The gears (2) transfer the movement to the gears (3) and these to the gears (4).

The gears (3) and (4) are put on the frames (7) and (8) which rotate freely with their ends firmly adjusted on rame (6).

The sealing jaws (5) are firmly adjusted on frames (7) and (8).

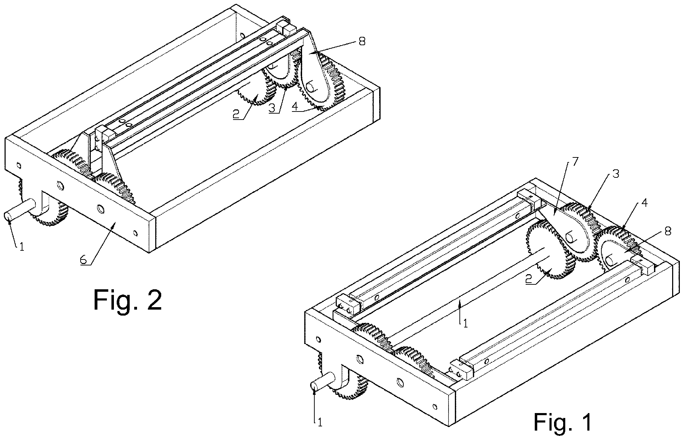

The anticlock wise movement of axis (1) provokes, due to the involvement of gears (2), (3) and (4) a change of position of the sealing bars from the horizontal position (see figure 1) to the vertical position (see figure 2) where they come in touch to each other.

The stiffness of frames (7) and (8) and the set of the pairs of gears ensure that the sealing jaws (5) are perfectly parallel during their closing process (sealing).

When the sealing jaws (5) come in contact a microswitch is energized and electric current (produced by battery) passes through the sealing wires. The sealing time is controlled through a timer. The sealing time is pre-determined. After the passing of the sealing time, the sealing jaws (5) return to their original position.

### FILM CHARACTERISTICS

In the prior art, a lot of possible film configurations either monolayer or multilayer have been proposed. The basic characteristics a film should have in order to be used in the particular case are
1. Barrier to odours
2. To have the proper deadfold properties (non-resilient) so that is compressed efficiently in the cassette if a cassette is used as a dispensing apparatus.
3. To have sufficient mechanical properties (eg tensile strength at break, elongation).
4. To have sufficient sealing properties as to be sealed with a low voltage rechargeable battery. Also the sealing properties must be sufficient to seal through wrinkles or pleats that are inevitable for this kind of application.

### List of reference signs:

- 1: axis
- 2: gear
- 3: gear
- 4: gear
- 5: sealing jaws
- 6: frame
- 7: frame
- 8: frame

## Claims

1. A waste packaging device comprising
a. a dispensing apparatus where a plastic film is stored
b. a bin where a fusion seal apparatus is located, and
c. the fusion seal apparatus containing sealing jaws (5) and comprising a battery with a maximum voltage of equal or less than 20V for providing the electric current necessary for heat sealing,
d. an axis (1),
wherein the sealing jaws (5) are movable by a rotation of the axis 1 which leads to a rotation of the sealing jaws (5), and
where the film comprises at least a layer of at least 50% per weight polyethylene homopolymer and/or copolymer, and where the weight/surface ratio of the film is less than 20 grams per square meter and the film can be heat sealed with the thermal energy transferred with the battery with a voltage of less than 20 V, and where the temperature for the heat sealing is set to less than 80°C.

2. The waste packaging device of claim 1, where the rotation of the axis is done with a help of a steering wheel.

3. The waste packaging device of claims 1 or 2, where the dispensing apparatus has the form of a cassette.

4. The waste packaging device of any one of the preceding claims, wherein the voltage is less than 16 V, preferably less than 12V.

5. A method for storing waste by using a waste packaging device comprising
a. a dispensing apparatus where a plastic film is stored
b. a bin where a fusion seal apparatus is located, and
c. the fusion seal apparatus containing sealing jaws (5) and comprising a battery with a maximum voltage of equal or less than 20V for providing the electric current necessary for heat sealing,
d. an axis (1),
the method comprising the following steps
a. pulling out plastic film from the dispensing apparatus,
b. putting a waste item in a suitable length of the film,
c. closing hermetically the plastic film with the use of the fusion seal apparatus,
where the seal is between a part of the film and another part of the same or other film,
where the sealed parts are put sequentially in the bin,
wherein the movement of the sealing jaws (5) is initiated by a rotation of the axis 1 which leads to a rotation of the sealing jaws (5), and
where the film comprises at least a layer of at least 50% per weight polyethylene homopolymer and/or copolymer, and where the weight/surface ratio of the film is less than 20 grams per square meter and the film can be heat sealed with the thermal energy transferred with the battery with a voltage of less than 20 V, and where the temperature for the heat sealing is set to less than 80°C.

6. The method of claim 5, where the rotation of the axis is done with a help of a steering wheel.

7. The method of claim 5 or 6, where the dispensing apparatus has the form of a cassette.

8. The method of any one of claims 5 to 7, wherein the voltage is less than 16 V, preferably less than 12V.

9. The method of any one of claims 5 to 8, where the sealing time is set to less than 5 seconds, preferably less than 3 seconds, more preferably less than 1 second.

10. The waste packaging device or method of any of the preceding claims, where the film further comprises an internal layer comprising at least one oxygen barrier material, and/or an inner layer comprising at least 50% per weight polyethylene homopolymer and/or copolymer.

11. The waste packaging device or method of any one of the preceding claims, where the film comprises at least
- an outer layer comprising polyethylene homopolymer and/or copolymer
- an internal layer comprising at least one oxygen barrier material
- an inner layer comprising polyethylene homopolymer and/or copolymer,
wherein the outer and/or inner layer comprise at least 50% per weight polyethylene homopolymer and/or copolymer.

12. The waste packaging device or method of any one of the preceding claims, where the weight/surface ratio of the film is less than 15g/m², preferably less than less than 13g/m².

13. The waste packaging device or method of any one of the preceding claims, where the film comprises an oxygen barrier material which is EVOH, PVDC or polyamide, or where the polyethylene copolymer is a copolymer of ethylene and butene or a copolymer of ethylene and hexene or a copolymer of ethylene and octene.

## Patentansprüche

1. Abfallverpackungsvorrichtung, umfassend
a. eine Ausgabeeinrichtung, die eine Kunststofffolie enthält,
b. einen Behälter, in dem sich eine Schmelzversiegelungseinrichtung befindet, und
c. wobei die Schmelzversiegelungseinrichtung Siegelbacken (5) umfasst und eine Batterie mit einer maximalen Spannung von kleiner oder gleich 20 V zum Bereitstellen des elektrischen Stroms umfasst, der zum Heißsiegeln notwendig ist,
d. eine Achse (1),
wobei die Siegelbacken (5) durch eine Drehung der Achse 1 bewegbar sind, die zu einer Drehung der Siegelbacken (5) führt, und
wobei die Folie mindestens eine Schicht aus mindestens 50 Gew.-% Polyethylenhomopolymer und/oder Copolymer umfasst und wobei das Verhältnis von Gewicht zu Oberfläche der Folie weniger als 20 Gramm pro Quadratmeter beträgt und die Folie mit der thermischen Energie, die mit der Batterie mit einer Spannung von weniger als 20 V übertragen wird, heißversiegelt werden kann und wobei die Temperatur für das Heißsiegeln auf weniger als 80 °C festgelegt ist.

2. Abfallverpackungsvorrichtung nach Anspruch 1, wobei die Drehung der Achse mit Hilfe eines Lenkrads durchgeführt wird.

3. Abfallverpackungsvorrichtung nach einem der Ansprüche 1 oder 2, wobei die Ausgabeeinrichtung die Form einer Kassette aufweist.

4. Abfallverpackungsvorrichtung nach einem der vorhergehenden Ansprüche, wobei die Spannung weniger als 16 V, vorzugsweise weniger als 12 V beträgt.

5. Verfahren zum Lagern von Abfall unter Verwendung einer Abfallverpackungsvorrichtung, umfassend:
a. eine Ausgabeeinrichtung, die eine Kunststofffolie enthält,
b. einen Behälter, in dem sich eine Schmelzversiegelungseinrichtung befindet, und
c. wobei die Schmelzversiegelungseinrichtung Siegelbacken (5) umfasst und eine Batterie mit einer maximalen Spannung von kleiner oder gleich 20 V zum Bereitstellen des elektrischen Stroms umfasst, der zum Heißsiegeln notwendig ist,
d. eine Achse (1),
wobei das Verfahren die folgenden Schritte umfasst:
a. Herausziehen von Kunststofffolie aus der Ausgabeeinrichtung,
b. Einbringen eines Abfallgegenstands in einer geeigneten Länge der Folie,
c. hermetisches Schließen der Kunststofffolie unter Verwendung der Schmelzversiegelungseinrichtung, wobei die Versiegelung zwischen einem Teil der Folie und einem anderen Teil derselben oder einer anderen Folie stattfindet, wobei die versiegelten Teile nacheinander in den Behälter eingebracht werden,
wobei die Bewegung der Siegelbacken (5) durch eine Drehung der Achse (1) eingeleitet wird, die zu einer Drehung der Siegelbacken (5) führt, und
wobei die Folie mindestens eine Schicht aus mindestens 50 Gew.-% Polyethylenhomopolymer und/oder Copolymer umfasst und wobei das Verhältnis von Gewicht zu Oberfläche der Folie weniger als 20 Gramm pro Quadratmeter beträgt und die Folie mit der thermischen Energie, die mit der Batterie mit einer Spannung von weniger als 20 V übertragen wird, heißversiegelt werden kann und wobei die Temperatur für das Heißsiegeln auf weniger als 80 °C festgelegt ist.

6. Verfahren nach Anspruch 5, wobei die Drehung der Achse mit Hilfe eines Lenkrads durchgeführt wird.

7. Verfahren nach Anspruch 5 oder 6, wobei die Ausgabeeinrichtung die Form einer Kassette aufweist.

8. Verfahren nach einem der Ansprüche 5 bis 7, wobei die Spannung weniger als 16 V, vorzugsweise weniger als 12 V beträgt.

9. Verfahren nach einem der Ansprüche 5 bis 8, wobei die Versiegelungszeit auf weniger als 5 Sekunden, vorzugsweise weniger als 3 Sekunden, noch bevorzugter weniger als 1 Sekunde festgelegt ist.

10. Abfallverpackungsvorrichtung oder Verfahren nach einem der vorhergehenden Ansprüche, wobei die Folie ferner eine interne Schicht, die mindestens ein Sauerstoff-Sperrmaterial umfasst, und/oder eine innere Schicht, die mindestens 50 Gew.-% Polyethylenhomopolymer und/oder Copolymer umfasst, umfasst.

11. Abfallverpackungsvorrichtung oder Verfahren nach einem der vorhergehenden Ansprüche, wobei die Folie mindestens
- eine äußere Schicht, die Polyethylenhomopolymer und/oder Copolymer umfasst,
- eine interne Schicht, die mindestens ein Sauerstoff-Sperrmaterial umfasst,
- eine innere Schicht, die Polyethylenhomopolymer und/oder Copolymer umfasst,
umfasst, wobei die äußere und/oder innere Schicht mindestens 50 Gew.-% Polyethylenhomopolymer und/oder Copolymer umfasst.

12. Abfallverpackungsvorrichtung oder Verfahren nach einem der vorhergehenden Ansprüche, wobei das Verhältnis von Gewicht zu Oberfläche der Folie weniger als 15 g/m², vorzugsweise weniger als 13 g/m² beträgt.

13. Abfallverpackungsvorrichtung oder Verfahren nach einem der vorhergehenden Ansprüche, wobei die Folie ein Sauerstoff-Sperrmaterial umfasst, das EVOH, PVDC oder Polyamid ist, oder wobei das Polyethylen-Copolymer ein Copolymer aus Ethylen und Buten oder ein Copolymer aus Ethylen und Hexen oder ein Copolymer aus Ethylen und Octen ist.

## Revendications

1. Dispositif de conditionnement de déchets, comprenant :
a. un appareil de distribution dans lequel un film en plastique est stocké,
b. un récipient dans lequel un moyen de scellement par fusion est situé, et
c. le moyen de scellement par fusion contenant des mâchoires de scellement (5) et comprenant une batterie avec une tension maximale inférieure ou égale à 20 V pour fournir le courant électrique nécessaire au scellement à chaud,
d. un axe (1),
dans lequel les mâchoires de scellement (5) sont mobiles par une rotation de l'axe 1 qui conduit à une rotation des mâchoires de scellement (5), et
où le film comprend au moins une couche d'au moins 50 % en poids de homopolymère et/ou copolymère de polyéthylène, et dans lequel le rapport poids/surface du film est inférieur à 20 grammes par mètre carré et le film peut être scellé à chaud avec l'énergie thermique transférée avec la batterie à une tension inférieure à 20 V, et dans lequel la température pour le scellement à chaud est définie comme étant inférieure à 80 °C.

2. Dispositif de conditionnement de déchets selon la revendication 1, dans lequel la rotation de l'axe se fait à l'aide d'un volant.

3. Dispositif de conditionnement de déchets selon les revendications 1 ou 2, dans lequel le moyen de distribution a la forme d'une cassette.

4. Dispositif de conditionnement de déchets selon une quelconque des revendications précédentes, dans lequel la tension est inférieure à 16 V, préférablement inférieure à 12 V.

5. Procédé destiné à stocker des déchets en utilisant un dispositif de conditionnement de déchets comprenant :
a. un moyen de distribution dans lequel un film en plastique est stocké,
b. un récipient dans lequel un moyen de scellement par fusion est situé, et
c. le moyen de scellement par fusion contenant des mâchoires de scellement (5) et comprenant une batterie avec une tension maximale inférieure ou égale à 20 V pour fournir le courant électrique nécessaire au scellement à chaud,
d. un axe (1),
le procédé comprenant les étapes suivantes :
a. faire sortir le film plastique de l'appareil de distribution,
b. placer un déchet dans une longueur de film appropriée,
c. fermer hermétiquement le film plastique en utilisant le moyen de scellement par fusion,
dans lequel le scellement est réalisé entre une partie du film et une autre partie du même film ou d'un autre film, dans lequel les parties scellées sont placées séquentiellement dans le récipient,
dans lequel le mouvement des mâchoires de scellement (5) est initié par une rotation de l'axe (1) qui conduit à une rotation des mâchoires de scellement (5), et
dans lequel le film comprend au moins une couche d'au moins 50 % en poids de homopolymère et/ou copolymère de polyéthylène, et dans lequel le rapport poids/surface du film est inférieur à 20 grammes par mètre carré et le film peut être scellé à chaud avec l'énergie thermique transférée avec la batterie à une tension inférieure à 20 V, et dans lequel la température pour le scellement à chaud est définie comme étant inférieure 80 °C.

6. Procédé selon la revendication 5, dans lequel la rotation de l'axe se fait à l'aide d'un volant.

7. Procédé selon la revendication 5 ou 6, dans lequel le moyen de distribution a la forme d'une cassette.

8. Procédé selon une quelconque des revendications 5 à 7, dans lequel la tension est inférieure à 16 V, préférablement inférieure à 12 V.

9. Procédé selon une quelconque des revendications 5 à 8, dans lequel le temps de scellement est défini comme étant inférieur à 5 secondes, préférablement inférieur à 3 secondes, plus préférablement inférieur à 1 seconde.

10. Dispositif ou procédé de conditionnement de déchets selon une quelconque des revendications précédentes, dans lequel le film comprend en outre une couche interne comprenant au moins un matériau-barrière vis-à-vis de l'oxygène, et/ou une couche intérieure comprenant au moins 50 % en poids de homopolymère et/ou copolymère de polyéthylène.

11. Dispositif ou procédé de conditionnement de déchets selon une quelconque des revendications précédentes, dans lequel le film comprend au moins
- une couche extérieure comprenant du homopolymère et/ou copolymère de polyéthylène
- une couche interne comprenant au moins un matériau-barrière vis-à-vis de l'oxygène
- une couche intérieure comprenant du homopolymère et/ou copolymère de polyéthylène,
dans lequel la couche extérieure et/ou intérieure comprend au moins 50 % en poids de homopolymère et/ou copolymère de polyéthylène.

12. Dispositif ou procédé de conditionnement de déchets selon une quelconque des revendications précédentes, dans lequel le rapport poids/surface du film est inférieur à 15 g/m², préférablement inférieur à 13 g/m².

13. Dispositif ou procédé de conditionnement de déchets selon une quelconque des revendications précédentes, dans lequel le film comprend un matériau-barrière vis-à-vis de l'oxygène qui est un EVOH, PVDC ou polyamide, ou dans lequel le copolymère de polyéthylène est un copolymère d'éthylène et de butène ou un copolymère d'éthylène et d'hexène ou un copolymère d'éthylène et d'octène.
